Europäisches Patentamt

European Patent Office

Office européen des brevets

(11) Publication number: 0 357 110
A1

## (12) EUROPEAN PATENT APPLICATION

(21) Application number: 89201974.6

(22) Date of filing: 27.07.89

(51) Int. Cl.5: C09D 151/00 , C08L 33/14 , C08F 265/00

(30) Priority: 05.08.88 NL 8801957

(43) Date of publication of application:
07.03.90 Bulletin 90/10

(84) Designated Contracting States:
AT BE CH DE ES FR GB GR IT LI LU NL SE

(71) Applicant: AKZO N.V.
Velperweg 76
NL-6824 BM Arnhem(NL)

(72) Inventor: Maters, Gerardus Johannes
Wilhelmus Maria
Pomonalaan 16
NL-4613 ER Bergen op Zoom(NL)
Inventor: Bartels, Tamme
Vuurdoornstraat 45
NL-8171 XN Vaassen(NL)
Inventor: Noomen, Arie
Schoonoord 22
NL-2215 ED Voorhout(NL)
Inventor: Wallrabenstein, Michael
Kurmainzer-Strasse 23
D-8761 Wörth Am Main(DE)
Inventor: Kehlenbach, Joachim
Am Hang 21
D-8763 Klingenberg(DE)

(74) Representative: Sieders, René et al
AKZO N.V. Patent Department (Dept. CO)
P.O. Box 9300
NL-6800 SB Arnhem(NL)

### (54) Two component coating curable at ambient temperature via a Diels-Alder reaction.

(57) A two component composition curable at ambient temperature via a Diels-Alder reaction is provided. The two components of the coating system can be water-based, they can be solvent-based, or a combination thereof.

The first component of the coating composition comprises a binder polymer functionalized with at least two conjugated diene groups. Although numerous binder polymers are contemplated, due to their excellent film-forming properties, examples of preferred binder polymers are those built up from reactants selected from the group consisting of furfuryl methacrylate, an aduct of sorbic acid to a polyfunctional glydicyl methacrylate copolymer, or combinations thereof, reacted in combination with at least one other monoethylenically unsaturated compound.

The second component of the coating composition comprises a multifunctional maleimide curing agent.

A mixture of the first and second coating components can be cured over a temperature range from about 0°C to about 120°C, and preferably from about 0°C to about 30°C.

FIG.7

# TWO COMPONENT COATING CURABLE AT AMBIENT TEMPERATURE VIA A DIELS-ALDER REACTION

## BACKGROUND OF THE INVENTION

### 1. Field of the Invention

The present invention relates to a two component coating system which can be cured at ambient temperature via a Diels-Alder reaction. The two components of the coating system can be water based, they can be solvent based, or a combination thereof, depending on the application. The first component comprises a binder polymer functionalized with at least two conjugated diene groups. The second component comprises a polyfunctional maleimide curing agent.

### 2. Background of the Invention

Coating compositions comprising bis-diene oligomers and bis-dieneophile oligomers which are cured at elevated temperatures (ranging from $130°C$ to $190°C$) are known to provide excellent resistance to corrosion, humidity and solvents. Such coating compositions are described in EP 0 114 091. The bis-diene oligomer and bis-dieneophile oligomer are said to chain-extend by reaction with each other, through Diels-Alder cycloaddition chemistry, to form polymers bearing hydroxy functionality or other crosslinking functionality. A crosslinking agent substantially reactive with the crosslinking functionality at elevated cure temperature and an organic solvent are also present in the coating composition. The Diels-Alder reactions are described in, e.g., P. Wasserman, Diels-Alder Reactions", Elsevier Publishing Co., New York, 1965. The coating compositions of EP 0 114 091 are not suitable for ambient temperature curing, however.

U.S. Patent 4,156,761 describes the room temperature cure of an elastomer, wherein a bis(1,3-pentadienyl ether)derivative of hydroxy terminated polybutadiene is cured using a bismaleimide of dimer diamine. The product is typically used as a binder for explosives, propellants and the like.

U.S. Patent No. 4,661,558 discloses a process for crosslinking and extending conjugated diene-containing polymers. The process uses a Diels-Alder reaction to increase the molecular weight and/or crosslink dienophiles. The polymer comprises a plurality of conjugated 1,3-diene systems incorporated into the molecular structure and at least 1% by weight (based on the weight of the polymer) consists of a bis-unsaturated dienophile which is reactive with the conjugated 1,3-dienes of the polymer. The process is used to expand the molecular weight of thermoplastic polymers, and the processing temperature range is from about $100°C$ to about $250°C$.

Coating compositions known to cure at ambient temperature often contain toxic substances, such as isocyanates, which restrict their use. The object of the present invention is to provide coating compositions which can be cured at ambient temperature, which exhibits low toxicity, and which provides excellent resistance to humidity, solvents and other corrosive substances.

## SUMMARY OF THE INVENTION

In accordance with the present invention, a two component coating composition curable at ambient temperature via a Diels-Alder reaction is provided. The two components of the coating system can be water based, they can be solvent based, or a combination thereof, depending on the application.

The first component of the coating composition comprises a binder polymer functionalized with at least two conjugated diene groups. The second component comprises a polyfunctional maleimide curing agent. The coating composition is typically cured over a temperature range from about $0°C$ to about $30°C$. Optionally, a curing temperature of above $30°C$ can be used to reduce curing time.

Preferred embodiments of the first component of the coating composition include binder polymers built up from furfuryl methacrylate and at least one other monoethylenically unsaturated compound. Also included are binder polymers built up from adducts of sorbic acid to a copolymer of glycidyl methacrylate and at least one other monoethylenically unsaturated compound. Copolymers of this kind are preferred due to the excellent film-forming properties they provide.

Examples of suitable monoethylenically unsaturated compounds include acrylic acid; methacrylic acid; methacrylonitrile; methacrylic acid amide; allylmethacrylate; (meth)acrylic esters of monoalcohols having 1-24 carbon atoms, such as methyl acrylate, methyl methacrylate, ethyl acrylate, n-propyl acrylate, n-butyl acrylate, isobutyl acrylate, 2-ethylhexyl acrylate, n-octyl acrylate, isobornyl acrylate, lauryl acrylate, and stearyl acrylate; vinyl esters of alkane carboxylic acids, such as vinyl acetate and vinyl propionate; dialkyl maleates, such as dimethyl maleate and diethyl maleate; monovinyl aromatic compounds, such as styrene, vinyl toluene, and α-methyl styrene; and tert. amino group-containing monoethylenically unsaturated compounds, such as N,N′dimethylaminoethylmethacrylate and N,N′diethylaminoethylmethacrylate.

A person of average skill in the art will be capable of preparing other suitable compositions according to the invention, such as those wherein the binder polymer is built up from at least one polyfunctional (meth)-acrylate-containing monomer, such as, for example, polyfunctional (meth)acrylates of glycol butane diol hexane diol, etc., including hexane diol diacrylate, hexane diol dimethacrylate, ethylene glycol diacrylate, ethylene glycol dimethacrylate, butane diol dimethacrylate, ethoxylated bisphenol A diacrylate, trimethylol propane triacrylate and trimethylol propane triethoxy triacrylate.

Other suitable examples of binder polymers include alkyd resins containing conjugated diene groups as side groups. U.S. Patent 4,070,259 also provides examples of suitable conjugated diene groups containing fatty acids or their esters or their mono-, di-, and triglycerides which may be built into the alkyd resin. The subject matter of U.S. Patent 4,070,259 is hereby incorporated by reference herein. The conjugated diene groups also may be prepared from suitable non-conjugated diene groups-containing fatty acids or their esters or their mono-, di-, and triglycerides in an esterification reaction at elevated temperatures (≥ 200° C) when preparing alkyd resin. Castor oil, for instance, at temperatures ≥ 210° C gives 9,11 and 9,12 octadecadienoic acid (9,11 conjugated diene).

Still other examples of suitable conjugated diene groups-containing binders are reaction products of polyisocyanate compounds and furfuryl alcohol or furfuryl amine and adducts of sorbic acid to epoxy resins.

One skilled in the art will be aware of diene-containing compounds which can be emulsion polymerized to provide aqueous dispersions of the type which can be used in the two component water-based coating compositions of the present invention. Preferred embodiments of such diene-containing compounds include furfuryl methacrylate and/or adducts of sorbic acid to a copolymer of glycidyl methacrylate reacted with monoethylenically unsaturated compounds such as acrylic acid, methacrylic acid, (meth)acrylic esters of monoalcohols having 1-24 carbon atoms (such as those previously named), vinyl esters of alkane carboxylic acids, dialkyl maleates, and monovinyl aromatic compounds.

One skilled in the art can prepare other water-based coating composition binder polymers such as those built up from at least one polyfunctional (meth)acrylate-containing monomer, for example, hexane diol diacrylate, ethylene glycol diacrylate, butane diol dimethacrylate, and trimethylol propane triacrylate.

Additional examples of suitable diene compounds which can be dispersion or emulsion polymerized to provide aqueous dispersions useful in the present invention include other monoethylenically unsaturated conjugated diene groups-containing compounds, for example, adducts of conjugated diene groups containing fatty acids to glycidyl (meth)acrylate. Sill, other examples of suitable diene compounds include adducts of an unsaturated monoisocyanate, (for example misopropenyl α,α-dimethylbenzylisocyanate (m-TMI monomer available from American Cyanamide Co.), with furfuryl amine or furfuryl alcohol followed by polymerization is possible.

Other suitable examples of binder polymers to provide aqueous emulsions or solutions include alkyd resins containing conjugated diene groups as side groups. Suitable diene groups containing fatty acids are mentioned in U.S. Patent No. 4,070,259.

The second component of the coating composition comprises a polyfunctional maleimide. When the coating composition is solvent based, preferred embodiments of the polyfunctional maleimide include those which are readily soluble in conventional solvents (such as aromatics esters and ketones). These preferred polyfunctional maleimides include, for example,

N,N′bis(4 maleimidophenyl)sulfone,
1,4-[N,N′ bis(4 maleimidophenoxy)]benzene,
N,N′bis(4 maleimido(4 phenoxyphenyl))sulfone,
2,2-[N,N′bis (4 maleimido(4 phenoxyphenyl))]propane,
N,N′bis(maleimido)isophorone,
N,N′bis(1,12 maleimido)dodecane,
N,N′bis(1,12 maleimido)-4,9 diondodecane,
N,N′,N″tris(maleimido)polyoxypropylene (trismaleimide prepared from Jeffamine T403 which is available from Texaco Chemical Company), and N,N′bis(maleimido)polyoxypropylene (polyoxypropylene bis maleimide prepared from Jeffamine D 230 which is available from Texaco Chemical Company).

When the coating composition is water based, the polyfunctional maleimide must be compatible with readily available emulsifiers used to prepare the emulsion of the maleimide. Preferred embodiments of polyfunctional maleimides for use in water base coatings include, for example, N,N'bis(1,12 maleimido)-4,9 dioxadodecane, N,N'bis(maleimido)isophorone, and N,N'bis(maleimido)polyoxypropylene (polyoxypropylene bismaleimide prepared from Jeffamine D 230 which is available from Texaco Chemical Company).

## BRIEF DESCRIPTION OF THE DRAWINGS

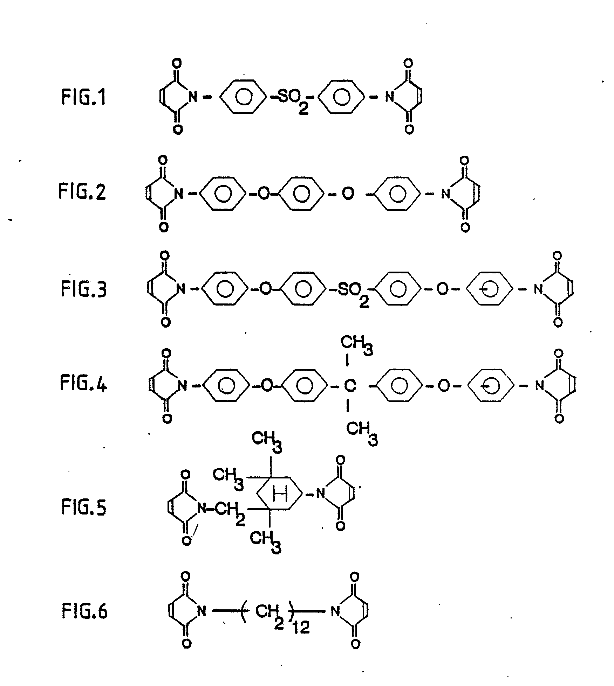

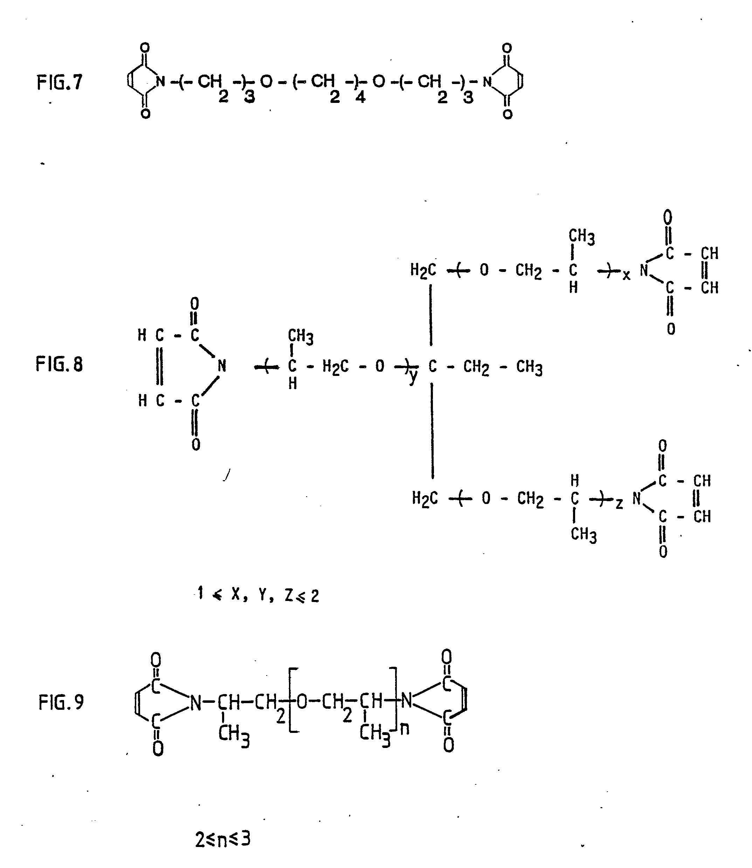

FIGS. 1-9 show preferred embodiments of the kinds of polyfunctional maleimide curing agents which can be used in the solvent-based coatings of the present invention. The polyfunctional maleimides shown in FIGS. 7-9 can be used in the water-based coatings of the present invention. For coatings which comprise a mixture of solvent and water, minimal experimentation can be used to determine which of the polyfunctional maleimides are compatible with the binder polymer solution, dispersion or emulsion.

## DETAILED DESCRIPTION OF THE PREFERRED EMBODIMENTS

The present invention two component coating system, which is solvent-based, includes a first component comprising a binder polymer functionalized with at least two conjugated diene groups which is solvated in an appropriate solvent system and a second component comprising a (dienophile) polyfunctional maleimide, also solvated in an appropriate solvent system (which is compatible with the first component). The performance of the solvent-based coating system in terms of its solution viscosity, flow and leveling characteristics as well as its cured, dry film properties depends on the molecular structure of the reactant groups used to build up the functionalized binder polymer as well as the molecular structure of the polyfunctional maleimide curing agent(s). Due to their excellent performance properties, binder polymers built up from furfuryl methacrylate and at least one other monoethylenically unsaturated compound; or, built up from a sorbic acid adduct to a copolymer of glycidyl methacrylate and at least one other monoethylenically unsaturated compound, or combinations thereof are preferred. Preparation of binder polymers of this kind are described below by way of example. Such examples are not intended to limit the scope of the present invention; however, as one skilled in the art can prepare binder polymers of other types, as previously discussed.

## EXAMPLES

Preparation of solvent-based binder polymers functionalized with at least two conjugated diene groups

Example 1

Preparation of Diene-functional Binder Polymer A

Four hundred grams of propylene glycol methyl ether was introduced into a reactor and heated to boiling temperature. Subsequently, a first mixture of 489 g of acrylic acid, 160 g of butyl acrylate, 400 g of styrene, and 240 g of furfuryl methacrylate was added to the reactor over a3 hour period, while a second mixture of 96 g of propylene glycol methyl ether and 48 g of tert. butylperoxy 2 ethyl hexanoate was added separately to the reaction over a concurrent period of 3 hours and 10 minutes. Next, 40 g of propylene glycol methyl ether was added. The reaction mixture was kept at boiling temperature until a conversion of over 98 % by weight of the reactants was obtained.

Upon addition of 350 g of propylene glycol methyl ether a 48,5 % by weight solution of the diene-functional compound A was obtained with an acid number of 21,0 and a viscosity of 161 cPa.s.

Example 2

Preparation of Diene-functional Binder Polymer B

Four hundred grams of propylene glycol methyl ether was introduced into a reactor and heated to boiling temperature. Next, a first mixture of 48 g of acrylic acid, 253,6 g of butyl acrylate, 306,5 g of styrene, and 240,0 g of furfuryl methacrylate, was added to the reactor over a 3 hour period, while a second mixture of 96,0 g of propylene glycol methyl ether and 56,0 g of tert. butylperoxy 2 ethyl hexanoate was added to the reactor separately but over a concurrent period of 3 hours and 10 minutes.

Subsequently, 40,0 g of propylene glycol methyl ether was added. The reaction mixture was kept at boiling temperature until a conversion of over 98% by weight of the reactants was obtained. After the reaction product was diluted with 350,0 g of propylene glycol methyl ether, a 47,7 % by weight solution of the diene-functional compound B was obtained with an acid number of 19,9 for the solution and a viscosity of 84 cPa.s.

Example 3

Preparation of Diene-functional Binder Polymer C

One hundred grams of butyl acetate, 100,0 g of xylene, 621,0 g of an adduct of 3 molecules of hexamethylene diisocyanate to one molecule of water (available under the trademark of Desmodur N 100 of Bayer AG), and 1,4 g of dibutyl tin dilaurate were introduced into a reactor and heated to 70° C. Next, 294,3 g of furfuryl alcohol was introduced over a period of about 1 hour.
The reaction mixture was kept at 70° C until an NCO content of less than 0,3 % by weight of the reactants was obtained.

After the reaction product was diluted with 60,0 g of xylene and 60,0 g of butyl acetate, a 69,8 % by weight solution of the diene-functional compound C was obtained with an acid number of 1,6 for the solution and a viscosity of 336 cPa.s.

Example 4

Preparation of Diene-functional Binder Polymer D

In the same manner as described for resin B, a copolymer was obtained consisting of 32% by weight of furfuryl methacrylate and 68% by weight of ethyl methacrylate.
The number average molecular weight was about 3400. The solids content of the copolymer solution in propylene glycol methyl ether was 50%. The viscosity was 48 cPa.s.

Example 5

Preparation of Diene-functional Binder Polymer E

Three hundred and fifty grams of xylene was introduced into a reactor and heated to boiling temperature. Subsequently, a mixture composed of 210,0 g of glycidyl methacrylate, 364,7 g of styrene, 125,3 g of butyl acrylate, and 17,5 g of tert. butyl perbenzoate was added over a period of about 3 hours, followed by 33,7 g of xylene.
The reaction mixture was kept at boiling temperature until a conversion of over 98 % by weight of the reactants was obtained. To the previously prepared copolymers were added 149,4 g of sorbic acid, 1,2 g of hydroquinone monoethyl ether, and 375,0 mg of chromium (III) 2 ethyl hexanoate; the reaction mixture was heated to 110° C, with air being passed through. The mixture was kept at 110° C until an acid number of 2,0 was obtained for the solution.

After 250 g of xylene had been added, a 57,7 % by weight solution of the diene-functional compound E was obtained with an acid number of 1,7 for the solution and a viscosity of 570 cPa.s.

Preparation of solvent-based polyfunctional maleimides

All polyfunctional primary amines may in principle be converted into polyfunctional maleimides. For example, German Patent Specification DOS 2 127 026, which is hereby incorporated by reference, provides a procedure for preparing such a maleimide. Most polyfunctional maleimides are poorly soluble in the conventional, low toxicity solvents for coating compositions.

In solvent-based coating compositions according to the invention, it is an advantage to use maleimides that are readily soluble in the conventional solvents (aromatics, esters, and ketones) for binders. Less readily soluble polyfunctional maleimides take an unduly long time to be mixed with the binder solution and may lead to hazy coatings having inadequate film properties.

By selecting the appropriate polyamines as a basis for the maleimide, curing agents can be obtained that are readily soluble in aromatics, esters, ketones, and the like. Examples of suitable polyamines include polyamines with aromatic ether groups, polyamines with branched cycloaliphatic groups, polyether amines, and adducts of amines to compounds with an epoxy group. A number of suitable maleimides are shown as preferred embodiments in FIGS. 1-9. Any average person versed in the art will be capable of selecting other similar polyfunctional maleimides soluble in the conventional solvents.

Solvent-based coatings prepared from the above-described dienefunctional binder polymers and polyfunctional maleimide curing agents

Generally, the coating composition contains sufficient binder and curing agent as to give a ratio of the number of equivalents of the conjugated diene groups of the binder polymer to the number of equivalents of the maleimide groups of the curing agent in the range of 0,3 to 2,0, preferably in the range of 0,5 to 1,5.

The coating composition contains at least one organic solvent, examples of which include aliphatic or aromatic hydrocarbons, esters, ether, alcohols, ketones, diketo compounds such as acetyl ketone, and nitroalkanes such as nitropropane, and (cyclo)aliphatic or aromatic esters of acetylacetic acid of which the (cyclo)alkyl group or the aromatic group has 1-20 carbon atoms, such as ethyl acetoacetate, cyclohexyl acetoacetate, and phenyl acetoacetate.

In addition, the coating composition typically contains the conventional additives, such as pigments, fillers, levelling agents, emulsifiers, anti-foaming agents, and rheology control agents, antioxidants, UV stabilizers, sag control agents, and catalysts such as organic carboxylic acids. Optionally, the composition may contain a non-functional polymer, such as an acrylate (co)polymer, cellulose acetopropionate, cellulose acetobutyrate, nitrocellulose, or a vinyl polymer.

The coating composition can be applied to the substrate in any suitable manner, such as by roller coating, spraying, brushing, sprinkling, flow coating, or dipping. Preferably, the composition is applied by spraying.

Suitable substrates include those of metals that may be pretreated or not, wood, synthetic materials, paper, or leather. Examples of suitable metals are iron, steel, and aluminium. Curing of the coating applied can be carried out in a satisfactory manner over a temperature range of from about 0°C to about 30°C. Optionally, a curing temperature of above 30°C can be used, to reduce curing time; the composition can be baked, for instance, at a temperature in the range of about 60° to about 120°C.

In the following examples solvent-base coating compositions according to the invention and the properties of the coatings obtained therewith are further described.

Coating composition viscosity was determined at 20°C with a Rheomat 15 rotation viscometer. The pot life of a coating composition, given in hours, was determined at 20°C by mixing equivalent amounts of resin and cross-linking agent determining the increase in viscosity in conformity with the DIN cup method. The pot life is the time it takes for the viscosity to increase by 100%. The initial viscosity was 15 sec., DIN cup 4. The resistance of the coating to premium grade petrol or methyl ethyl ketone was determined after 7 days' drying at ambient temperature by placing on a coated panel a wad of cotton wool soaked with the solvent in question for 1 minute (methyl ethyl ketone) or 5 minutes (premium grade petrol), followed by scratching with a pencil of a 2B hardness. The resistance was rated on a 1-5 scale, where "1" is poor and "5" excellent. The hardness of a coating was determined by the Persoz test after drying for 1 day or 7 days at 20°C.

Example 6

The Diene-functional Binder Polymer Component A was mixed with the polyfunctional malemid curing agent shown in FIG. 8 to give a ratio of the number of equivalent of the conjugated diene groups of the binder polymer to the number of equivalents of maleimide groups of about 1.

The mixed coating composition was applied to a glass panel by spraying and was cured at a temperature of about 20°C over a time period of one week. The dry film thickness was about 60 micrometers. The cured coated panel was permitted to stand at room temperature for one day and for seven prior to hardness testing by the Persoz test and for seven days prior to solvent resistance testing.

The pot life of the resulting coating composition and the hardness (Persoz sec.) and solvent resistance of the cured coating are presented in Table 1.

Example 7

The Diene-functional Binder Polymer Component B was mixed with the polyfunctional maleimide curing agent shown in FIG. 8 to give a ratio of the number of equivalents of the conjugated diene groups of the binder polymer to the number of equivalents of maleimide groups of about 1.

The mixed coating composition was applied, cured to a dry thickness of about 60 micrometers, and tested as described in Example 6.

The pot life of the coating composition and the hardness and solvent resistance of the cured coating are presented in Table 1.

Example 8

The Diene-functional Binder Polymer Component C was mixed with the polyfunctional maleimide curing agent shown in Fig. 8 to give an equivalents ratio of conjugated diene groups to maleimide groups of about 1.

The mixed coating composition was applied, cured to a dry thickness of about 60 micrometers, and tested as described in Example 6.

The pot life of the coating composition and the hardness and solvent resistance of the cured coating are presented in Table 1.

Examples 9-11

The Diene-functional Binder Polymer Component D was mixed with the polyfunctional maleimide curing agent shown in FIG. 7 to produce the coating composition of Example 9; was mixed with the polyfunctional maleimide shown in FIG. 5 to produce the coating composition of Example 10; and, was mixed with the polyfunctional maleimide shown in FIG. 4 to produce the coating composition of Example 11. The equivalent ratio of conjugated diene groups to maleimide groups was about 1 for each of the above Examples.

In each Example, the mixed coating composition was applied, cured to a dry thickness of about 60 micrometers, and tested as described in Example 6.

The pot life of each coating composition for Example 9-11 and the hardness and solvent resistance for each cured coating is presented in Table 1.

Examples 12-16

The Diene-functional Binder Component E was mixed with a particular polyfunctional maleimide curing agent in each Example as follows: Example 12, the curing agent shown in FIG.2; Example 13, the curing agent shown in FIG. 3; Example 14, the curing agent shown in FIG. 4; Example 15, the curing agent shown in FIG. 7; and Example 16, the curing agent shown in FIG. 6. The equivalent ratio of conjugated diene groups to maleimide groups was about 1 for each of the above Examples.

Each mixed coating composition was applied, cured to a dry thickness of about 60 micrometers, and tested as described in Example 6.

7

The pot life of each coating composition and the hardness and solvent resistance of each of the cured coatings for Examples 12-16 is presented in Table 1.

Table 1

| Example | Resin | Cross-linking Agent | Pot life* hr | Hardness (Persoz sec.) | | Solvent Resistance after 1 week | |
|---|---|---|---|---|---|---|---|
| | | | | after 1 day | after 1 week | petrol | MEK |
| 6 | A | 8 | 12 | 46 | 242 | 5 | 3 |
| 7 | B | 8 | 12 | 29 | 202 | 5 | 3 |
| 8 | C | 8 | 24 | 20 | 70 | 5 | 2 |
| 9 | D | 7 | 23 | 46 | 212 | 5 | 3 |
| 10 | D | 5 | 30 | 62 | 232 | 5 | 3 |
| 11 | D | 4 | 21 | 200 | 280 | 5 | 3 |
| 12 | E | 2 | 11 | 160 | 260 | 5 | 3 |
| 13 | E | 3 | 13 | 120 | 218 | 4 | 2 |
| 14 | E | 4 | 10 | 184 | 284 | 5 | 3 |
| 15 | E | 7 | 8 | 64 | 240 | 5 | 3 |
| 16 | E | 6 | 28 | 122 | 240 | 4 | 2 |

* Doubling of initial viscosity

Coating compositions according to the invention are excellently suited for use in coatings where curing at ambient temperature is of importance. Typically coating compositions according to the invention will be used as a two-component system (resin and curing agent). Therefore, in addition to the hardness and durability of the coating to be obtained, the pot life of the mixture of the two components is of considerable importance.

The present invention two component coating system, which is water-based, includes a first component comprising an aqueous dispersion, emulsion or solution of a binder polymer functionalized with at least two conjugated diene groups and a second component comprising an emulsion or solution of a polyfunctional maleimide. Typically the water-based coating system contains from about 5% to about 10% by weight organic solvent. The dry weight content of the coating composition ranges from about 30 % by weight to about 60 % by weight.

The water-based coatings can also be cured at ambient temperature, e.g. from about 0° C to about 30° C. Higher cure temperatures in the range of from about 30° C to about 120° C can be used to reduce the required cure time.

Again, due to their excellent performance properties, the preferred examples presented below are for (meth)acrylate based binder polymers. However, one skilled in the art can prepare other emulsion, dispersion or solution polymerized water-based binder polymers of the kinds previously discussed.

Preparation of water-based binder polymers functionalized with at least two conjugated diene groups

Example 17

Preparation of Diene-functional Binder Polymer F(A) and F(B)

To prepare binder polymer F(A), a mixture of 450 g of distilled water, 8 g of sodium lauryl sulfate, 9,5 g of Triton X 165 (ethoxylated octyl phenol available from Rohm and Haas Co.) and 2,1g of borax was placed in a one liter reaction vessel which was fitted with an agitator and a pressure value. The reaction vessel was purged with nitrogen and heated using a thermostatially controlled water jacket to about 70° C. To this mixture was added a polymerization initiator of 1,5 g of potassium peroxodisulfate dissolved in 20 g of water. Subsequently, the following mixture of acrylic monomers was metered into the reactor over a time period of about 4 hours: 265 g of butylacrylate, 150 g of methyl methacrylate, 75 g of furfurylmethacrylate (15% by weight of the mixture of monomers), and 10 g of methacrylamide.

After completion of the addition of the monomers, the contents of the reactor were further reacted at about 70° C for a time period of about two hours.

The reaction yield was a solids content of about 51% by weight of the reaction mixture.

Binder polymer F(B) was prepared as described above except that 50 g. of furfurylmethacrylate (10% by weight) of the mixture of monomers was used.

Example 18

Preparation of Diene-Functional Binder Polymer G

A mixture of 470 g of distilled water, 8g of sodium lauryl sulfate, 9,5g of Triton X 165 ethoxylated octyl phenol and 2,1 g of borax was placed in the reaction vessel described in Example 17. The reaction vessel was purged with nitrogen and heated to about 70° C. To this mixture was added a polymerization initiator of 1.5 g of potassium peroxodisulfate as a dry powder.

A first reaction monomer mixture was then added to the reaction vessel over a period of about 1 hour. The monomer mixture consisted essentially of 115 g methylmethacrylate, 2,5 g trimethylolpropane triacrylate, 2,5 g allylmethacrylate, 125 g butylacrylate, and 5 g methacrylic acid amide.

Subsequently, a second reaction monomer mixture was added to the reaction vessel over a period of about 3 hours. The monomer mixture consisted essentially of 95 g methylmethacrylate, 50 g furfurylmethacrylate (corresponding to 10% by weight of the total first and second monomer mixtures), 100 g butylacrylate, and 5 g methacrylic acid amide.

Upon completion of addition of the second monomer mixture the contents of the reactor were further reacted at about 70° C for a time period of about two hours.

The reaction yield was a solids content of about 50% by weight of the reaction mixture.

Preparation of water-based polyfunctional maleimide emulsions

Example 19

In each case, an aliquote amount of a 50% bismaleimide solution in Toluene was mixed with an equal amount of water containing 0,5% by weight of sodium lauryl sulfate. A high speed mixer, applied for a 3 to 5 minute period at room temperature, was used to accomplish mixing. The resulting emulsions contained the bismaleimide at a concentration of about 25% by weight. Emulsions comprising N,N′bis(maleimide)-isophorone (FIG. 5), N,N′bis(1,12 maleimido)-4,9 dioxadodecane (FIG. 7) and N,N′bis(maleimido)-polyoxypropylene (FIG.9) were prepared as described above.

In cases wherein the polyfunctional maleimide has less solubility in the organic solvent, the concentration of polyfunctional maleimide obtainable in the emulsion may be lower. Organic solvents which can be used to prepare the emulsion can be any which are immiscible in water, which adequately solvate the polyfunctional maleimide and which are compatible with the diene-functional binder polymer dispersion, emulsion or solution. Examples of organic solvents which can be used typically include organic esters, higher ketones, and aromatics.

Water-based coatings prepared from the above-described diene-functional binder polymers and polyfunctional maleimide curing agents

Examples 20-21

The aqueous dispersion of Diene-functional Binder Polymer F(B) was mixed with the Polyfunctional Maleimide Emulsion of N,N′bis(maleimido)polyoxypropylene (FIG. 9) at an equivalent ratio of conjugated diene groups to maleimide groups of about 1 in Example 20. In Example 21, the same aqueous dispersion of Diene-functional Binder Polymer F(A) was mixed with the same Polyfunctional Maleimide Emulsion at an equivalent ratio of about 1.

In each example the resulting coating composition was applied to a glass panel using a doctor blade to a wet thickness of about 220 micrometers. The coating was cured at about 22° C over a time period of one week. The dried coating thickness ranged from about 60 micrometer to about 70 micrometers.

The pot life of each coating compositon was determined as previously described.

Each coated panel was permitted to stand at room temperature for one week prior to testing for hardness (König sec) and solvent resistance. The petrol resistance was measured in the same manner as previously described. An assitional solvent resistance test D-norm 53230 (the MIBK Rub Test) was performed on each coated panel. In this latter test, a wad of cotton wool soaked with methylisobutylketone is placed on the coated panel. A weight of 500 grams is placed on the wad, and the wad is moved distance of 10 cm to and fro at a speed of 120 times per minute until the substrate is visible.

## Examples 22-24

The aqueous dispersion of Diene-functional Binder Polymer G was mixed with the Polyfunctional Maleimide Emulsion of N,N´bis(1,12 maleimido)-4,9 dioxadodecane (FIG. 7) at an equivalent ratio of conjugated diene groups to maleimide groups of about 1 in Example 22. The resulting coating was applied, cured and tested in the same manner as described in Examples 20 and 21. Test results for the coating composition and the cured coating are presented in Table 2.

The aqueous dispersion of Diene-functional Binder Polymer G was mixed with the Polyfunctional Maleimide Emulsion of N,N´bis(maleimido)isophorone (FIG.5) at an equivalent ratio of conjugated diene groups to maleimide groups of about 1 in Example 23. The resulting coating was applied, cured and tested in the same manner as described above. Test results for the coating composition and the cured coating are presented in Table 2.

The aqueous dispersion of Diene-functional Binder Polymer G was mixed with the Polyfunctional Maleimide Emulsion of N,N´bis(maleimido)polyoxypropylene (FIG. 9) at an equivalent ratio of conjugated diene groups to maleimide groups of about 1 in Example 24. The resulting coating was applied, cured and tested in the same manner as described above. Test results for the coating composition and the cured coating are presented in Table 2.

Table 2

| Example | Resin | | Cross-linking Agent | Pot Life hr | Hardness (König sec) | Solvent Resistance after 1 week | |
|---|---|---|---|---|---|---|---|
| | Type | Content of FMA* | | | | petrol | MIBK rub test |
| 20 | F(B) | 10 | 9 | > 48 | 90 | 4 | > 120 |
| 21 | F(A) | 15 | 9 | > 48 | 120 | 4-5 | - 200 |
| 22 | G | 10 | 7 | > 48 | 60 | 4 | > 120 |
| 23 | G | 10 | 5 | > 48 | 85 | 4 | - 130 |
| 24 | G | 10 | 9 | > 48 | 67 | 4 | > 120 |

* furfurylmethacrylate

Many modifications and variations based on the preferred embodiments specifically disclosed herein can be made in the compositions and methods described herein without substantially departing from the concept of the present invention. Accordingly it is intended that such modifications and variations are included within the scope of the present invention as defined in the claims which follow.

## Claims

1. A two component coating composition comprising a binder polymer and a curing agent characterized in that said polymer binder comprises a polymer functionalized with at least two conjugated diene groups and said curing agent comprises a polyfunctional maleimide.

2. A coating composition according to Claim 1 characterized in that said binder polymer and said curing agent are soluble in an organic solvent or in a combination of organic solvents.

3. A coating composition according to Claim 1 characterized in that said binder polymer and said curing agent each comprises an aqueous dispersion, emulsion, or solution.

4. A coating composition according to Claim 1 characterized in that said binder polymer or said curing agent or both include components which include both water and at least one organic solvent.

5. A coating composition according to Claims 1-4 characterized in that said binder polymer is built up from reactants selected from the group consisting of furfuryl methacrylate, an adduct of sorbic acid to a polyfunctional glycidyl methacrylate copolymer or combinations thereof reacted in combination with at least one other monoethylenically unsaturated compound.

6. A coating composition according to Claim 5 characterized in that said at least one other monoethylenically unsaturated compound comprises a (meth)acrylate monomer.

7. A coating composition according to Claims 1-4 characterized in that said curing agent is a bismaleimide.

8. A coating composition according to Claim 5 characterized in that said curing agent comprises a bismaleimide.

9. A method of preparing a coated substrate characterized in that the method comprises the steps of:

(a) providing a first coating component comprising a polymer functionalized with at least two conjugated diene groups;

(b) providing a second component comprising a polyfunctional maleimide;

(c) mixing said first component with said second component;

(d) applying said mixture of said first and second components to a substrate; and

(e) curing said applied mixture over a temperature range from about $0^\circ$ C to about $120^\circ$ C.

10. The method according to Claim 9, characterized in that said curing step (e) is carried out over a temperature range from about $0^\circ$ C to about $30^\circ$ C.

11. The method according to Claim 9, characterized in that the ratio of the number of equivalents of the conjugated diene groups of said first component to the number of equivalents of maleimide groups of said second component ranges from about 0,3 to about 2,0.

12. The method according to Claims 9-11, characterized in that said first coating component is built up from reactants selected from the group consisting of furfuryl methacrylate, an adduct of sorbic acid to a polyfunctional glycidyl methacrylate copolymer or combinations thereof reacted in combination with at least one other monoethylenically unsaturated compound.

13. The method according to Claim 12, characterized in that said at least one other monoethylenically unsaturated compound comprises a (meth)acrylate monomer.

14. A method according to Claims 9-11, characterized in that said second coating component comprises a bismaleimide.

FIG.1

FIG.2

FIG.3

FIG.4

FIG.5

FIG.6

FIG.7

$$O=\!\!\!\!\underset{\text{(structure)}}{N-(-CH_2-)_3-O-(-CH_2-)_4-O-(-CH_2-)_3-N}\!\!\!\!=O$$

FIG.8

$1 \leqslant X, Y, Z \leqslant 2$

FIG.9

$2 \leqslant n \leqslant 3$

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-4 661 558 (NASA) --- | | C 09 D 3/00 C 08 L 33/14 C 08 F 265/00 |
| A,D | EP-A-0 114 091 (FORD) · --- | | |
| A,D | US-A-4 156 761 (MARTIN et al.) ----- | | |

TECHNICAL FIELDS SEARCHED (Int. Cl.5)

C 09 D
C 08 F
C 08 L

The present search report has been drawn up for all claims

| Place of search | Date of completion of the search | Examiner |
|---|---|---|
| THE HAGUE | 14-11-1989 | MEULEMANS R.A.M.G.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  & : member of the same patent family, corresponding document

EPO FORM 1503 03.82 (P0401)